# EUROPÄISCHE PATENTANMELDUNG

(11) **EP 0 816 370 A1**
(43) Veröffentlichungstag der Anmeldung: **07.01.1998**
(21) Anmeldenummer: 97109378.6
(22) Anmeldetag: 10.06.1997
(51) Int. Cl.: C07F 9/6574

(54) **Verfahren zur Herstellung von 2,2',2"-Nitrilo triethyl-tris(3,3',5,5'-tetra-tert.-butyl-1,1'-biphenyl-2,2'-diyl)phosphit**

(30) Priorität: 19.06.1996 DE 19624425
(71) Anmelder: HOECHST AKTIENGESELLSCHAFT, 65929 Frankfurt am Main (DE)
(72) Erfinder: Kleiner, Hans-Jerg, Dr., 61476 Kronberg (DE); Pfahler, Gerhard, Dr., 86169 Augsburg (DE)

(57) **Zusammenfassung**

Die vorliegende Erfindung betrifft ein Verfahren zur Herstellung von 2,2',2''-Nitrilo[triethyl-tris(3,3',5,5'-tetra-tert.-butyl-1,1'-biphenyl-2,2'-diyl)phosphit], abgekürzt NTTBP der Formel I 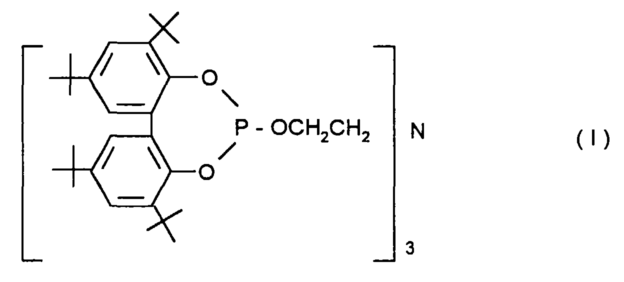 dadurch gekennzeichnet, daß man das Chlor-Phosphit der Formel II 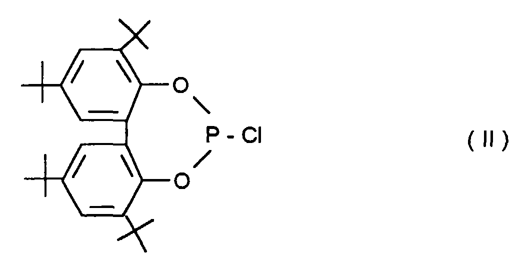 in eine Lösung von Triethanolamin und einem tertiären Amin im Molverhältnis Chlor-Phosphit zu tertiärem Amin zu Triethanolamin von 3,3-2,9 : 3,3-2,9 : 1 eindosiert, nachrührt und nach beendeter Umsetzung vom Hydrochlorid des tertiären Amins abtrennt.
NTTBP ist ein wertvoller Stabilisator für Polymere.

## Beschreibung

2,2',2''-Nitrilo[triethyl-tris(3,3',5,5'-tetra-tert.-butyl-1,1'-biphenyl-2,2'-diyl)phosphit] (abgekürzt NTTBP) ist ein wertvoller Stabilisator für Polymere (siehe US 4,318,845 und US 4,374,219) und kommt außer in amorpher Festphasenmodifikation (US 5,276,076 und US 5,373,040) in drei verschiedenen kristallinen Modifikationen vor (α-Modifikation: WO 94/12509, β-Modifikation: WO 94/12508 und γ-Modifikation: WO 95/03587).

NTTBP wird bisher nach US 4,318,845 (Beispiel 4) so hergestellt, daß man in einem ersten Verfahrensschritt ausgehend von Phosphortrichlorid und 2,2',4,4'-Tetra-tert.-butyl-o,o'-bisphenol 6-Chlor-2,4,8,10-tetra-tert.-butylbenzo[d,f][1,3,2]dioxaphosphepin (abgekürzt Chlor-Phosphit) in Lösung herstellt und in die Lösung ein Gemisch aus Triethanolamin und Triethylamin eintropft. Nach beendeter Umsetzung wird von Triethylaminhydrochlorid abgesaugt und das Lösungsmittel destillativ entfernt. Das NTTBP verbleibt als Rohprodukt in der amorphen Festphasenmodifikation. Nach zweimaliger Umkristallisation aus Acetonitril/Toluol erhält man NTTBP als weißes Pulver mit einem Schmelzpunkt von 121-134°C in einer Ausbeute von nur knapp über 70 %, was nicht sehr befriedigend ist.

Es bestand daher ein Bedarf nach einem Verfahren, das NTTBP in technisch einfacher Weise und zugleich in hoher Ausbeute zugänglich macht.

Überraschenderweise wurde nun gefunden, daß man NTBBP in Ausbeuten von bis zu 94% erhält, wenn man nicht die Chlorphosphit-Lösung, sondern die Lösung von Triethanolamin/tertiärem Amin vorlegt und dazu die Chlorphosphit-Lösung zudosiert.

Gegenstand der Erfindung ist somit ein Verfahren zur Herstellung von 2,2',2''-Nitrilo[triethyl-tris(3,3',5,5'-tetra-tert.-butyl-1,1'-biphenyl-2,2'-diyl)phosphit] der Formel I 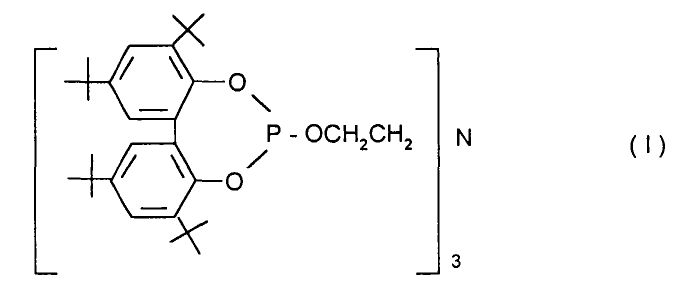 worin man das Chlor-Phosphit der Formel II 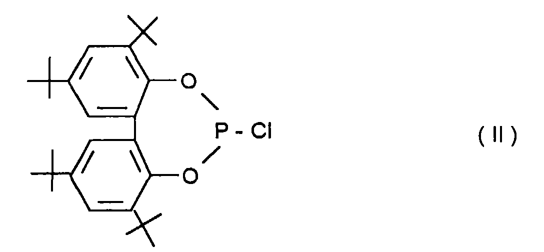 in eine Lösung von Triethanolamin und einem tertiären Amin im Molverhältnis Chlor-Phosphit zu tertiärem Amin zu Triethanolamin von 3,3-2,9 : 3,3-2,9 : 1, bevorzugt 3:3:1 eindosiert und nach beendeter Umsetzung vom Hydrochlorid des tertiären Amins abtrennt.

Als geeignete tertiäre Amine sind z.B. Trimethylamin, Triethylamin, Tri-n-propylamin, Diisopropylmethylamin, Diisopropylethylamin oder Tri-n-butylamin zu nennen. Besonders bevorzugt ist Triethylamin.

Das Chlor-Phosphit der Formel II kann entsprechend Beispiel A oder Beispiel 1 der US 4,318,845 und US 4,374,219 hergestellt werden. Bevorzugt ist jedoch seine Herstellung gemäß Helv.-Chim. Acta 76, 900 (1993), worauf hier ausdrücklich Bezug genommen wird.

Das erfindungsgemäße Verfahren wird so durchgeführt, daß das Triethanolamin und das tertiäre Amin in einem geeigneten Lösungsmittel gelöst werden. Geeignete Lösungsmittel sind z.B. Dichlormethan, Toluol, Xylole wie o-Xylol, Tetrahydrofuran oder Acetonitril oder Gemische dieser Lösungsmittel. In diese Lösung wird nun eine Lösung des Chlor-Phosphits in den obengenannten Lösungsmitteln bei guter Durchmischung zudosiert. Die Reaktionstemperaturen sollen dabei zweckmäßig zwischen -10 und 50°C, vorzugsweise zwischen -5 und 0°C liegen. Nach längerer Nachrührzeit, vorzugsweise bei Raumtemperatur, und Beendigung der Umsetzung wird das Aminhydrochlorid abgesaugt und nachgewaschen. Das Filtrat wird destillativ vom Lösungsmittel befreit. Dabei wird entweder im Vakuum oder bei Normaldruck gearbeitet. Dabei fällt das NTTBP als ca. 95 %iges Rohprodukt an. Wird im Vakuum bis zu einer Innentemperatur von 120°C (bei 1 mbar) vom Lösungsmittel befreit, so erhält man die amorphe feste Modifikation. Bei Abdestillation der Lösungsmittel bei Normaldruck erhält man das NTTBP bei einer Temperatur von ca. 160-180°C als Schmelze. Zweckmäßigerweise wird bei dem Verfahren unter Ausschluß von Feuchtigkeit gearbeitet, um eine die Ausbeute verringernde Hydrolyse zu verhindern.

Je nach gewünschter Modifikation können diese Rohprodukte mit Hilfe bestimmter Lösungsmittel in die reine α- oder β-Modifikation überführt werden.

Entsprechend der WO 94/12508 vorgeschlagene Lösungsmittel sind geeignet, die β-Modifikation zu erhalten. Überraschenderweise hat sich gezeigt, daß auch Butanol-1 geeignet ist, das Rohprodukt in die β-Modifikation zu überführen.

### Beispiel 1

24,32 g (0,163 Mol) Triethanolamin und 49,48 g (0,489 Mol) Triethylamin werden in 200 ml o-Xylol und 50 ml Tetrahydrofuran gelöst. In diese Mischung wird bei -5 bis 0°C unter Rühren während 75 Minuten eine 60°C warme Lösung von 232 g (0,489 Mol) Chlor-Phosphit in 800 ml o-Xylol getropft. Nach beendeter Zugabe wird auf Raumtemperatur erwärmt und etwa 60 Stunden nachgerührt. Dann wird abgesaugt und mit o-Xylol nachgewaschen. Das Filtrat wird bei Normaldruck destilliert bis zu einer Innentemperatur von 160-176°C. Man läßt die anfallende Schmelze dann schnell in 500 ml Aceton zufließen. Man erhält eine klare Lösung, das NTTBP kristallisiert beim Abkühlen aus, wird abgesaugt und mit Aceton nachgewaschen, dann im Vakuum bei 50°C getrocknet. Man erhält 224,4 g mit einem Schmelzpunkt von 154-158°C (Reinheitsgrad nach 31-PNMR: 99,4 %ig) der α-Modifikation. Das entspricht einer Ausbeute von 94 % der Theorie.

### Beispiel 2

Die wie in Beispiel 1 hergestellte Schmelze wird langsam unter lebhaftem Rühren zu 690 ml Butanol-1 gegeben. Das Produkt kristallisiert langsam aus. Nach ca. 15 Stunden Nachrühren wird abgesaugt, gewaschen und im Vakuumtrockenschrank bei 80-90°C getrocknet. Man erhält 206 g mit einem Schmelzpunkt von 192-198°C (Reinheitsgrad nach 31-P-NMR: 92,6 %ig) der β-Modifikation.
Das entspricht einer Ausbeute von 86 % der Theorie.

## Patentansprüche

1. Verfahren zur Herstellung von 2,2',2''-Nitrilo[triethyl-tris(3,3',5,5'-tetra-tert.-butyl-1,1'-biphenyl-2,2'-diyl)phosphit] (NTTBP) der Formel I 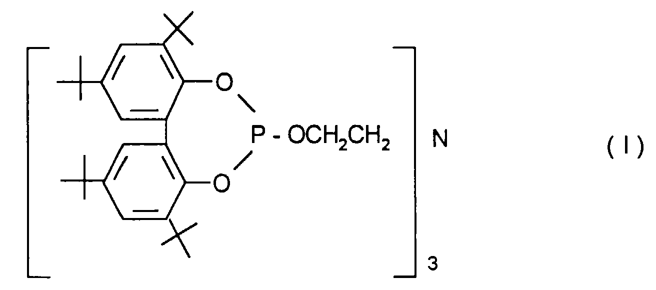 dadurch gekennzeichnet, daß man das Chlor-Phosphit der Formel II 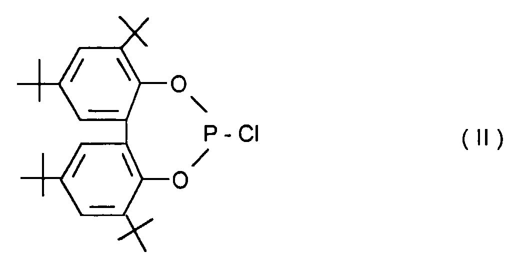 in eine Lösung von Triethanolamin und einem tertiären Amin im Molverhältnis Chlor-Phosphit zu tertiärem Amin zu Triethanolamin von 3,3-2,9 : 3,3-2,9 : 1 eindosiert und nach beendeter Umsetzung vom Hydrochlorid des tertiären Amins abtrennt.

2. Verfahren gemäß Anspruch 1, dadurch gekennzeichnet, daß das Molverhältnis Chlor-Phosphit zu tertiärem Amin zu Triethanolamin 3:3:1 beträgt.

3. Verfahren gemäß Anspruch 1 oder 2, dadurch gekennzeichnet, daß es sich bei dem tertiären Amin um Triethylamin handelt.

4. Verfahren gemäß einem der Ansprüche 1 bis 3, dadurch gekennzeichnet, daß die vorgelegte Amin-Lösung auf 0°C oder weniger gekühlt wird.

5. Verfahren gemäß einem der Ansprüche 1 bis 4, dadurch gekennzeichnet, daß bei Raumtemperatur nachgerührt wird.

6. Verfahren gemäß einem der Ansprüche 1 bis 5, dadurch gekennzeichnet, daß unter Ausschluß von Feuchtigkeit gearbeitet wird.
